# EUROPÄISCHE PATENTSCHRIFT

(11) **EP 4 553 366 B1**
(45) Veröffentlichungstag und Bekanntmachung des Hinweises auf die Patenterteilung: **08.10.2025**
(21) Anmeldenummer: 23208452.5
(22) Anmeldetag: 08.11.2023
(51) Int. Cl.: F16P 3/14

(54) **ABSICHERN EINER MASCHINE**
SECURING OF A MACHINE
SÉCURISATION D'UNE MACHINE

(43) Veröffentlichungstag der Anmeldung: 14.05.2025
(73) Patentinhaber: SICK AG, 79183 Waldkirch (DE)
(72) Erfinder: Schott, Michael, 79115 Freiburg (DE); Arockiaraj, Alfred, 79183 Waldkirch (DE); Hofmann, Dr. Christoph, 79108 Freiburg (DE)

(56) Entgegenhaltungen:
- EP-A1- 4 047 523
- EP-A1- 4 170 438

## Beschreibung

Die Erfindung betrifft ein Verfahren zum Absichern einer Maschine nach dem Oberbegriff von Anspruch 1 sowie ein entsprechendes Absicherungssystem.

Ziel der Absicherung ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. Besonders anspruchsvoll wird die Absicherung im Falle einer Kooperation zwischen Mensch und Maschine beziehungsweise Roboter.

Herkömmlich werden vor allem optoelektronische Sensoren wie Lichtgitter oder Laserscanner für eine sicherheitstechnische Überwachung eingesetzt. In jüngerer Zeit treten Kameras und auch 3D-Kameras hinzu. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Es sind auch Alternativen zu Schutzfeldern bekannt, etwa darauf zu achten, dass zwischen Maschine und Person ein von der Relativbewegung abhängiger Mindestabstand eingehalten ist ("speed and separation").

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen. So wird durch auf den speziellen Sensor zugeschnittene Maßnahmen gewährleistet, dass die Sensordaten eine ausreichende Qualität besitzen, um die Detektionsaufgabe zu lösen, oder andernfalls ein dies verhindernder Fehler aufgedeckt.

Die EP 3 651 458 A1 offenbart eine sichere Stereokamera, die die Funktionsfähigkeit ihrer Bildsensoren überprüft. Dazu kennt sie eine Referenztiefenkarte und wertet die Unterschiede der jeweils aktuellen Tiefenkarte zu der Referenztiefenkarte statistisch aus. Das funktioniert nur in einem statischen Umfeld.

In der DE 10 2018 117 274 A1 werden Umgebungen der Pixel analysiert, um festzustellen, wann Rauscheinflüsse zu groß für eine sichere Erfassung von Objekten werden. Damit bleiben zahlreiche Gründe unberücksichtigt, die eine Objektdetektion verhindern können.

In den letzten Jahren wurden ganz unabhängig von der Sicherheitstechnik erhebliche Fortschritte auf dem Gebiet der künstlichen neuronalen Netze erzielt. Diese Technologie erreicht breite Anwendungsreife durch neue Architekturen der neuronalen Netze ("Deep Learning") und durch die stark gestiegene verfügbare Rechnerleistung insbesondere in Form von modernen Grafikprozessoren. Eine wichtige Herausforderung bei der Verwendung neuronaler Netze zur Situationsbewertung und Problemlösung ist die Notwendigkeit des Anlernens des neuronalen Netzes mit repräsentativen Trainingsdaten. Bevor das neuronale Netz die gestellte Aufgabe zuverlässig erledigen kann, muss es mit vergleichbaren Situationen und deren vorgegebener Bewertung konfrontiert werden. Anhand dieser Beispiele lernt das neuronale Netz das richtige Verhalten. Dabei ist ein neuronales Netz nur in gewissen Grenzen zu einer Verallgemeinerung in der Lage.

Beim Einsatz neuronaler Netze in der Sicherheitstechnik zeigen sich besondere Schwierigkeiten, die Detektionsfähigkeit nachzuweisen und Fehler aufzudecken. Wird kein sicherheitskritisches Objekt im Umfeld der Maschine erkannt, so bedeutet das noch nicht zwingend, dass keine Gefahr besteht. Vielmehr kann es an Problemen des Sensors oder in der Szenerie liegen, dass ein tatsächlich vorhandenes Objekt fälschlich unerkannt bleibt. Sensorfehler können womöglich durch technische Maßnahmen ähnlich herkömmlichen sicheren Sensoren ohne neuronale Netze abgefangen werden. Schwierig wird es, wenn beispielsweise in einer Szenerie die Beleuchtung ausfällt oder die Szenerie mit Sonnenlicht geflutet ist. Ein neuronales Netz erkennt dann kein Objekt, aber die Ursache gibt es nicht bekannt, so dass es zu gefährlichen Fehleinschätzungen kommen kann.

In der DE 10 2017 105 174 A1 wird ein Verfahren zum Erzeugen von Trainingsdaten für die Überwachung einer Gefahrenquelle beschrieben. Dabei bewertet ein nach klassischer Sicht sicherer Sensor die jeweilige Situation, womit dann annotierte Trainingsdaten für das Training eines neuronalen Netzes zur Verfügung stehen. Das hat aber nichts mit der Frage zu tun, ob in der späteren Verwendung des neuronalen Netzes die zu bewertenden Bilddaten eine ausreichende Qualität aufweisen.

Die EP 4 170 438 A1 offenbart ein Sicherheitssteuerungssystem mit einer Bildsensoreinheit, die die Umgebung einer Maschine aufnimmt. Die gesammelten Bilder werden mit einem neuronalen Netz ausgewertet, um Körperteile zu erkennen und erforderlichenfalls ein Sicherheitssignal zu erzeugen.

In der EP 4 047 523 A1 wird eine Überwachungseinrichtung für eine Anlage vorgestellt, in der ein Sicherheitssensor bei Registrieren eines Objektseingriffs ein Schaltsignal ausgibt, um eine Sicherheitsfunktion auszulösen. Es ist weiterhin ein Auswertesystem vorgesehen, das Messdaten des Sicherheitssensors oder eines weiteren Sensors mit einem neuronalen System bewertet, um abhängig von dieser Bewertung Wammeldungen und/oder Korrektureingriffe für Bewegungsabläufe der Anlage zu erzeugen.

Die Arbeit von Begon, Jean-Michel und Pierre Geurts, "Sample-free white-box out-of-distribution detection for deep leaming", Proceedings of the IEEE/CVF Conference on Computer Vision and Pattern Recognition, 2021, beschreibt einen Ansatz, wie sogenannte OOD-Beispiele (out-of-distribution) erkannt werden können. Dafür werden die internen Aktivierungen des neuronalen Netzes analysiert. Das ist aufwändig und in der sicherheitstechnischen Praxis nicht machbar.

Marco Pavone diskutiert in einem Konferenzbeitrag "Building Trust in Al for Autonomous Vehicles" auf der Nvidia GTC Developer Conference vom 20.-23. März 2023 die Verwendung mehrerer tiefer neuronaler Netze mit Vergleich der jeweiligen Ergebnisse. Das löst für die hier betrachteten Sicherheitsanwendungen trotz des immensen Mehraufwands das Problem nicht, weil ein Bild von schlechter Qualität auch in mehreren neuronalen Netzen zu unzuverlässigen Ergebnissen führen wird.

In gewisser Weise lässt sich das Auftreten unbrauchbarer Eingangsdaten als Anomaliedetektion verstehen, wie dies beispielsweise in den Arbeiten Chalapathy, Raghavendra, und Sanjay Chawla "Deep leaming for anomaly detection: A survey", arXiv preprint arXiv:1901.03407 (2019) und Chalapathy, Raghavendra, Edward Toth und Sanjay Chawla, "Group anomaly detection using deep generative models", Machine Learning and Knowledge Discovery in Databases: European Conference, ECML PKDD 2018, Dublin, Ireland, September 10-14, 2018, Proceedings, Part I 18, Springer International Publishing, 2019, untersucht wird. Hier besteht schon ein grundlegendes Problem darin, dass es in aller Regel an Trainingsbeispielen der Anomalie in ausreichender Anzahl fehlt.

Aus Kalyanasundaram, Girish, Puneet Pandey und Manjit Hota, "A Pre-processing Assisted Neural Network for Dynamic Bad Pixel Detection in Bayer Images", Computer Vision and Image Processing: 5th International Conference, CVIP 2020, Prayagraj, India, December 4-6, 2020, Revised Selected Papers, Part II 5. Springer Singapore, 2021, ist bekannt, wie korrupte Pixel mit einem neuronalen Netz gefunden werden können. Das ist aber nur einer der möglichen Fehler, und der herkömmliche Ansatz zielt auf eine Korrektur der korrupten Pixel, wohingegen in einer Sicherheitsanwendung festgestellt werden soll, ob die Fehler kritisch im Sinne der Unfallvermeidung sind oder nicht.

Es ist daher Aufgabe der Erfindung, die Überprüfung der Detektionsfähigkeit in einer Sicherheitsanwendung zu verbessern.

Diese Aufgabe wird durch ein Verfahren und ein Absicherungssystem zum Absichern einer Maschine nach Anspruch 1 beziehungsweise 15 gelöst. Die Maschine wird von einem Sensor überwacht. Dabei sind Maschine und Sensor nur stellvertretend im Singular genannt, es sind beliebig komplexe Sicherheitsanwendungen mit einer Vielzahl von Sensoren und/oder Maschinen vorstellbar. Das Verfahren ist ein computerimplementiertes Verfahren, das beispielsweise in einer Recheneinheit des Sensors und/oder einer angeschlossenen Recheneinheit abläuft. Der Sensor arbeitet vorzugsweise berührungslos, ist insbesondere ein optoelektronischer Sensor. Der Sensor und/oder die Hardware für Auswertungen sind vorzugsweise sicher ausgelegt. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Durch Auswertung der Sensordaten wird festgestellt, ob eine gefährliche Situation vorliegt. Wenn das so ist, wird die Maschine abgesichert. Eine gefährliche Situation liegt insbesondere vor, wenn sich ein Objekt oder eine Person zu nahe an der Maschine befindet. Es sind einleitend einige Konzepte wie eine Schutzfeldüberwachung oder ein Speed-and-Separation Monitoring genannt, ein weiteres Beispiel ist ein sicheres Objekttracking mit gefährlichen und ungefährlichen Trajektorien von Objekten im Umfeld der Maschine, und auch eine Beurteilung der Sensordaten mit einem Verfahren des maschinellen Lernens ist vorstellbar, wie unten noch genauer erläutert. Eine Absicherung der Maschine kann je nach Sicherheitsanwendung, erkannter Gefahr und weiteren möglichen Kriterien in einer Verlangsamung, einem Ausweichen, dem Wechsel auf ein anderes Programm oder notfalls dem Anhalten der Maschine bestehen.

Es wird weiterhin die Detektionsfähigkeit geprüft, ob also eine Einschätzung einer gefährlichen Situation derzeit überhaupt möglich ist. Andernfalls wird auch aus diesem Grund, analog dem Fall einer erkannten gefährlichen Situation und mit gleichen möglichen Absicherungsmaßnahmen, die Maschine abgesichert. Es geht hier um einen sicherheitsrelevanten Ausfall der Detektionsfähigkeit, nicht eine möglicherweise nur ganz kurze Störung. Maßgeblich ist, dass die Absicherung schnell genug reagieren muss, insbesondere in der von der Sicherheitsanwendung vorgegebenen Ansprechzeit. Herkömmliche Maßnahmen hierfür sind einleitend diskutiert und auch erfindungsgemäß vorstellbar, jedoch für sich unzureichend, beispielsweise ein Ausfall des Sensors, fehlende Durchlässigkeit optischer Bauteile, ein Bildsensortest und dergleichen.

Die Erfindung geht von dem Grundgedanken aus, dass die Detektionsfähigkeit anhand der Sensordaten und mit einem Verfahren des maschinellen Lernens geprüft wird. Dabei bezeichnet maschinelles Lernen wie üblich als Gegenbegriff zu einer klassischen Auswertung einen datengetriebenen Ansatz, in dem nicht von Hand Auswertungsstrategien entwickelt werden, sondern aus Beispielen gelernt wurde. Das Ergebnis der Bewertung der Sensordaten durch das Verfahren des maschinellen Lernens ist eine Gütewertzahl. Diese muss eine Vorgabe erfüllen, die einer ausreichenden Qualität der Sensordaten entspricht, mit der die Auswertung der Sensordaten hinsichtlich einer gefährlichen Situation möglich ist.

Die Erfindung hat den Vorteil, dass verlässlich festgestellt werden kann, ob der Sensor funktionsfähig ist und ob zugleich dessen Erfassungsbereich, also die Szenerie im Umfeld der Maschine, eine Gefährdungsbeurteilung anhand der Sensordaten zulässt. Damit kann der Absicherung vertraut werden, insbesondere auch dann, wenn ein Verfahren des maschinellen Lernens an der Auswertung der Sensordaten zur eigentlichen Gefährdungsbeurteilung beteiligt ist. Als Analogie kann die visuelle Wahrnehmung des Menschen herangezogen werden: Bei Dunkelheit, bei starkem Regen oder bei fehlender Brille würde ein Mensch sehr viel vorsichtiger agieren. Die Erfindung ermöglicht es der Sicherheitsanwendung zu erkennen, dass sie sich in einer vergleichbaren Ausnahmesituation befindet. Dabei kommt die Erfindung im Gegensatz zu einigen der einleitend genannten Ansätze auch mit dynamischen Szenerien zurecht. Die Balance, ab wann die Detektionsfähigkeit nicht mehr gegeben sein soll, lässt sich sehr fein einstellen. Das ist wichtig, weil zwar Sicherheit Priorität hat, eine zu vorsichtige Beurteilung aber durch objektiv unnötige Absicherungsmaßnehmen zu erheblichen Einbußen in der Verfügbarkeit beziehungsweise Produktivität führt.

Die Gütewertzahl ist vorzugsweise binär. Sie unterscheidet also direkt nur zwischen den beiden Fällen, dass eine Einschätzung einer gefährlichen Situation möglich ist oder nicht möglich ist. Im Anschluss an die Detektionsfähigkeitsprüfung des Verfahrens des maschinellen Lernens ist damit keine weitere Auswertung erforderlich, die binäre Entscheidung oder Klassifikation ist bereits getroffen. Es sei nochmals wiederholt, dass ein negatives Ergebnis der Detektionsfähigkeitsprüfung nicht unmittelbar zu einer Absicherung führen muss. Beispielsweise kann bei einer Kamera als Sensor über die Absicherung immer erst nach Auswertung von n Bildern oder Frames entschieden werden, wobei dann unzureichende Qualität in einem einzelnen Bild oder in wenigen Bildern möglicherweise noch tolerierbar ist.

Die Gütewertzahl bewertet vorzugsweise mindestens eine Störeigenschaft der Sensordaten quantitativ. Eine solche Gütewertzahl ist beispielsweise eine Zahl in einem gewissen Wertebereich wie [0, 1, ..., 10] oder ein Prozentwert. Sie bewertet eine bestimmte Störeigenschaft oder Korruptionsmodalität (corruption modality) der Sensordaten, und daraus lässt sich dann durch Vergleich mit vorgegebenen Kriterien sehr einfach ableiten, ob die Qualität der Sensordaten für eine Einschätzung der gefährlichen Situation ausreicht oder nicht. An dieser Stelle ist zu beachten, dass es mehrere Gütewertzahlen geben kann beziehungsweise die Gütewertzahl mehrdimensional sein kann. Die jeweiligen Komponenten können unterschiedliche Störeigenschaften bewerten. Auch eine zugleich binäre und quantitativ differenzierende Gütewertzahl ist demnach kein Widerspruch, sondern möglich und bezieht sich dann auf verschiedene Komponenten. Die quantitativen Komponenten ermöglichen dann beispielsweise eine Konsistenzprüfung der binären Komponente oder eine Analyse, wie es zu dieser Bewertung kam. Letzteres ist insbesondere im Sinne der "explainable Al" von Interesse.

Das Verfahren des maschinellen Lernens weist bevorzugt einen Klassifikator auf. Die Zuweisung einer Gütewertzahl kann als Klassifikation aufgefasst werden, und zwar in beiden Fällen einer binären Gütewertzahl und einer differenzierteren, quantitativ bewertenden Gütewertzahl. Es gibt zahlreiche Verfahren des maschinellen Lernens für Klassifikationsaufgaben, beispielsweise Entscheidungsbäume, Support Vector Machine, K-Nearest Neighbor oder Bayes-Klassifikatoren. Es ist denkbar, mehrere Klassifikatoren oder allgemein Verfahren des maschinellen Lernens einzusetzen, die dann für eine oder mehrere Störeigenschaften zuständig sind, in aufteilender oder (teil-)überlappender Weise. So kann ein Verfahren des maschinellen Lernens speziell für bestimmte Störeigenschaften optimiert werden.

Das Verfahren des maschinellen Lernens weist vorzugsweise ein neuronales Netz auf. Ein neuronales Netz, insbesondere ein tiefes neuronales Netz (Deep Learning) oder Faltungsnetz (CNN, Convolutional Neural Network), eignet sich sehr gut, um auch komplexe Sensordaten wie Bilder oder 3D-Punktwolken zu bewerten oder speziell zu klassifizieren.

Der Sensor ist vorzugsweise eine Kamera oder ein 3D-Sensor. Diese Sensoren liefern sehr viele Informationen über das Umfeld der Maschine und können daher vielfältige Sicherheitsanwendungen lösen. Die Sensordaten sind entsprechend Bilder beziehungsweise Bilddaten im Falle einer üblichen Kamera oder 3D-Punktwolken beziehungsweise Tiefenkarten im Falle eines 3D-Sensors, also beispielsweise einer 3D-Kamera, eines LiDARs, eines Laserscanners oder Radars.

Die Auswertung der Sensordaten weist vorzugsweise einen Objektdetektor auf, der insbesondere Fremdobjekte in der Umgebung der Maschine erkennt. Dabei wird vorzugsweise eine Kamera oder ein 3D-Sensor eingesetzt. Als Fremdobjekt wird ein im Umfeld der Maschine nicht bekanntes oder erwartetes Objekt bezeichnet. Je nach Sicherheitsanwendung wird jedes erkannte Objekt als Fremdobjekt angesehen, es werden vorab bekannte Objekte als Referenz eingelernt, oder erwartete Objekte werden dynamisch als solche erkannt und von Fremdobjekten unterschieden. Ob ein erkanntes Objekt eine gefährliche Situation bedeutet, ist ebenfalls von der Sicherheitsanwendung abhängig.

Einige mögliche Kriterien sind die Größe, Form, Position, Geschwindigkeit oder Bewegungsbahn des Objekts.

Das Verfahren des maschinellen Lernens wird vorzugsweise durch ein überwachtes Lernen trainiert, bei dem als Trainingsdaten eine Vielzahl von Trainingsbeispielen aus Sensordaten mit bekannter zugehöriger Gütewertzahl verwendet werden. Überwachtes Training (supervised learning) bedeutet, dass das gewünschte Ergebnis, in diesem Fall die zu einem Satz Sensordaten eines Trainingsbeispiels passende Gütewertzahl, von außen vorgegeben wird. Das Training erfolgt bevorzugt vor dem eigentlichen Absicherungsbetrieb, kann aber auch im Betrieb oder in Betriebspausen verfeinert oder vertieft werden. In dem Training lernt das Verfahren des maschinellen Lernens anhand der Trainingsbeispiele die Zugehörigkeit einer Gütewertzahl zu Sensordaten und ist nach dem Training in der Lage, dies auf aus dem Training unbekannte Sensordaten zu übertragen.

Die Trainingsbeispiele werden bevorzugt mit mindestens einer Störeigenschaft in mindestens eine Störintensität verändert, um weitere Trainingsbeispiele zu erzeugen. Die anfänglich vorhandenen Trainingsbeispiele werden also gezielt gestört oder korrumpiert, um weitere Trainingsbeispiele zu erhalten. Die Störung kann auf verschiedene Weisen erfolgen, also in verschiedenen Störeigenschaften oder Korruptionsmodalitäten (corruption modality), und/oder verschieden stark ausgeprägt sein, wie durch eine Störintensität ausgedrückt. Wenn später von dem Verfahren des maschinellen Lernens eine quantitativ bewertende Gütewertzahl bestimmt wird, dann kann diese mit der Störintensität übereinstimmen, es sind aber auch unterschiedliche Skalen denkbar.

Die Sensordaten weisen bevorzugt Bilder auf, und es wird mindestens eine der folgenden Störeigenschaften verwendet: Bild zumindest bereichsweise zu hell oder zu dunkel, Bild zumindest bereichsweise unscharf, Bewegungsartefakte, statisches oder/und dynamisches Bildrauschen, Bildbereiche vertauscht, insbesondere durch Adressfehler, Bild unvollständig. Damit wird der bisher recht abstrakte Begriff der Störeigenschaft an Beispielen illustriert. Eine Veränderung in einer Störeigenschaft könnte also darin bestehen, das Bild künstlich in durch die Störintensität vorgegebenem unterschiedlichem Ausmaß aufzuhellen, entsprechend für die anderen genannten Beispiele auch in beliebiger Kombination. Es sind also Störungen in zwei Dimensionen möglich, die einerseits durch die Auswahl der Störeigenschaft insbesondere aus einer Liste wie in den genannten Beispielen und andererseits durch das Ausmaß der Störung oder die Störintensität gegeben sind. Die Sicherheitsanwendung wird umso robuster, je besser die Störeigenschaften die in der Realität möglichen Störungen oder Fehlerfälle abbilden. Im Idealfall ist daher eine Liste der berücksichtigten Störeigenschaften abschließend. Da das in der Praxis nicht möglich ist, werden stattdessen vorzugsweise die wichtigsten Störeigenschaften identifiziert und berücksichtigt. In gewissem Rahmen kann aber das Verfahren des maschinellen Lernens auch verallgemeinern, so dass keineswegs jedes nicht im Detail im Voraus beachtete und in den Trainingsdaten daher nicht explizit abgebildete Szenario sofort zu einer übersehenen Gefährdung führt.

Die Trainingsdaten werden bevorzugt ausgewertet, insbesondere mit einem Objektdetektor, um festzustellen, ob trotz der Störeigenschaft eine gefährliche Situation erkannt wird, und je nach Ergebnis wird einem Trainingsbeispiel eine Gütewertzahl zugeordnet. Voraussetzung für ein überwachtes Lernen ist die Vorgabe des gewünschten Ergebnisses, was als Labeling oder Annotieren bezeichnet wird und regelmäßig ein extrem mühsamer und aufwändiger händischer Vorgang ist. Insbesondere im Falle künstlich generierter oder veränderter Trainingsdaten, wie im Vorabsatz beschrieben, fehlt es zunächst an dem passenden Label, also der zugehörigen Gütewertzahl, da ja a priori nicht bekannt ist, ob nach einer Veränderung die Einschätzung einer gefährlichen Situation noch möglich ist oder nicht. Nach dieser Ausführungsform wird das Annotieren automatisch durch Auswertung, also Gefährdungsbeurteilung anhand der Sensordaten des Trainingsbeispiels und insbesondere einen Objektdetektor geleistet. Das Label zu dem ursprünglichen, nicht durch Störungen veränderten oder korrumpierten Trainingsbeispiel ist ja bekannt. In der Auswertung zum automatischen Annotieren wird also insbesondere festgestellt, ob dieses Label noch reproduziert wird oder ob die Korruption dafür zu stark war.

Die Trainingsdaten werden vorzugsweise mit demselben Verfahren ausgewertet, das auch zum Erkennen einer gefährlichen Situation in der Absicherung der Maschine zum Einsatz kommt. Mit Auswertung ist an dieser Stelle das automatische Labeling oder Annotieren des Vorabsatzes gemeint. Prinzipiell könnte das mit irgendeinem Auswertungsverfahren oder Objektdetektor vorgenommen werden. Besonders bevorzugt wird aber gerade diejenige Auswertung verwendet, die auch im eigentlichen Betrieb zum Einsatz kommt. So besteht eine besonders gute Übereinstimmung in der Bewertung von Sensordaten hinsichtlich der Frage, ob die Qualität der Sensordaten für die Gefährdungsbeurteilung ausreicht oder nicht. Es ist denkbar, mehrere Auswertungen oder Objektdetektoren einzusetzen, deren Labels dann kombiniert werden.

Die Trainingsdaten werden bevorzugt mit zunehmender Störintensität und/oder unterschiedlichen Störeigenschaften verändert, bis eine Auswertung der veränderten Trainingsdaten eine gefährliche Situation nicht mehr erkennt. Für die Beurteilung, ob mit einem bestimmten Satz Sensordaten noch eine Erkennung einer gefährlichen Situation möglich ist, besteht ein besonderes Interesse an den Grenzfällen, in denen Störungen diese Auswertung, insbesondere eine Objektdetektion, gerade noch beziehungsweise gerade nicht mehr zulassen. Wenn diese Grenzfälle richtig beurteilt werden, gilt das für einfachere Fälle ferner der Grenze erst recht. Deshalb wird diese Grenze vorteilhafterweise durch unterschiedliche Störeigenschaften und/oder Störintensitäten ausgetestet, beispielsweise in einem iterativen Verfahren, das nach und nach unterschiedlichste Kombinationen von Störeigenschaften durchprobiert und deren jeweilige Störintensität erhöht oder, was hier im Begriff "zunehmend" impliziert sein soll, auf beliebige andere Weise systematisch verändert.

Zur Schaffung einer Sicherheitsmarge wird vorzugsweise bereits Trainingsbeispielen eine Gütewertzahl entsprechend einer nicht mehr vorhandenen Detektionsfähigkeit zugeordnet, in denen die Auswertung eine gefährliche Situation noch erkannt hat. Damit wird absichtlich ein Abstand zu der im Vorabsatz erläuterten Grenze eingehalten, und vorsichtshalber werden nur solche Sensordaten von der Detektionsfähigkeitsprüfung als ausreichend betrachtet, die die Kriterien zumindest ein wenig übererfüllen. Wenn beispielsweise eine Störeigenschaft im Bereich 0..10 quantifiziert und die Grenze der nicht mehr vorhandenen Detektionsfähigkeit bei 7 gefunden wurde, dann wird absichtlich viel stärkere Anforderung einer Störeigenschaft von höchstens 5 statt dem Austesten entsprechend an der Grenze bei höchstens 7 gestellt. Dies dient dem verbesserten Umgang mit einem möglichen fatalen Fehler, dass die Detektionsfähigkeitsprüfung Sensordaten fälschlich als noch ausreichend für eine Einschätzung einer gefährlichen Situation ansieht, in der eigentlichen Auswertung oder Objekterkennung aber eine tatsächlich vorhandene Gefährdung aufgrund unzureichender Qualität der Sensordaten übersehen wird. Es werden also mehr falsch-negative Ergebnisse der Detektionsfähigkeit in Kauf genommen, um falsch-negative Ergebnisse der Gefährdungsbeurteilung zu verhindern.

Die Auswertung der Sensordaten zur Erkennung einer gefährlichen Situation weist vorzugsweise ebenfalls ein Verfahren des maschinellen Lernens auf. Bisher war offengeblieben, mit welchem Verfahren erkannt wird, ob eine gefährliche Situation vorliegt, außer dass es vorzugsweise auf einer Objektdetektion basiert und einleitend einige Beispiele genannt sind. Mit dieser Ausführungsform wird nun nicht nur für die Detektionsfähigkeitsprüfung, sondern auch für die Einschätzung einer gefährlichen Situation ein Verfahren des maschinellen Lernens eingesetzt. Es sind dieselben Verfahren des maschinellen Lernens einsetzbar, die oben genannt wurden, insbesondere ein neuronales Netz. Besonders bevorzugt wird das Verfahren des maschinellen Lernens der Detektionsfähigkeitsprüfung in Doppelfunktion auch für die Erkennung einer gefährlichen Situation eingesetzt und dementsprechend zuvor trainiert. Vorteilhafterweise wird eine Funktion, etwa die Detektionsfähigkeitsprüfung, erst nachtrainiert. Beispielsweise gibt es ein bereits trainiertes neuronales Netz für eine Objekterkennung, und dem wird ein zusätzlicher Ausgang für die Klassifikation der Sensordaten im Sinne der Detektionsfähigkeitsprüfung hinzugefügt und diese nachtrainiert.

Das erfindungsgemäße Absicherungssystem weist mindestens einen Sensor zur Überwachung der Maschine und zur Erzeugung von Sensordaten und mindestens eine Steuer- und Auswertungseinheit auf. Mit Steuer- und Auswertungseinheit ist eine beliebige Recheneinheit gemeint, die Teil des Sensors, der Maschine, eigenständig oder eine Mischform davon sein kann. Darin ist ein erfindungsgemäßes Verfahren in einer der beschriebenen Ausführungsformen implementiert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtdarstellung einer beispielhaften Absicherung einer Maschine mit einem Sensor;
- Fig. 2: eine Darstellung der gezielten Störung von Trainingsdaten und des automatischen Annotierens, ob mit den jeweiligen gestörten Trainingsdaten noch die Erkennung einer gefährlichen Situation möglich ist; und
- Fig. 3: ein beispielhaftes Ablaufdiagramm des Veränderns und Annotierens von Trainingsdaten und des damit ermöglichten Trainings eines neuronalen Netzes für eine Detektionsfähigkeitsprüfung.

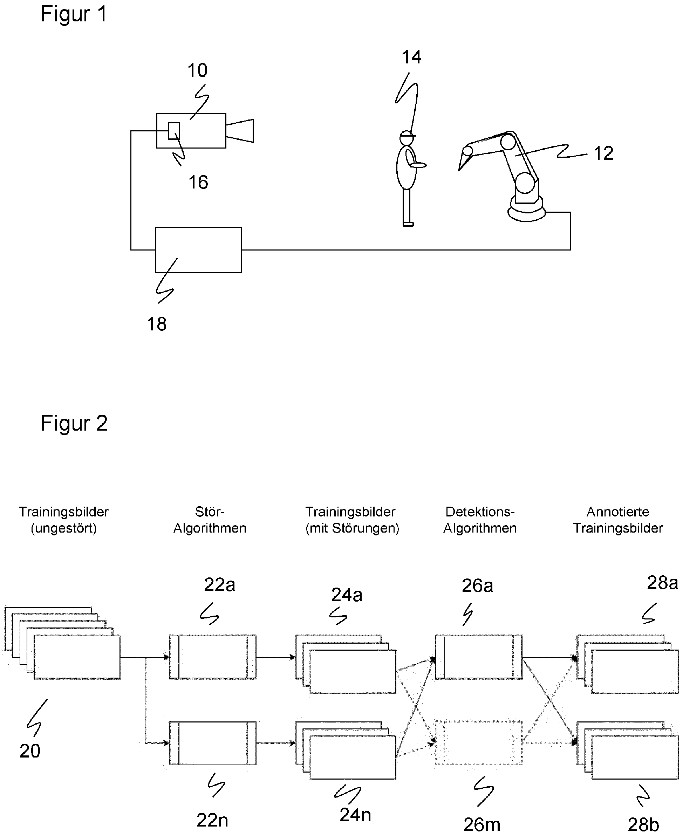

Figur 1 zeigt eine beispielhafte Sicherheitsanwendung, in der eine Kamera 10 einen Roboter 12 überwacht. Die Kamera 10 und der Roboter 12 sind Beispiele für einen überwachenden Sensor beziehungsweise eine zu überwachende Maschine. Die von der Kamera 10 erzeugten Sensordaten werden ausgewertet, um zu erkennen, ob eine gefährliche Situation vorliegt, insbesondere eine Person 14 dem Roboter 12 zu nahe kommt.

Wird eine Gefahr erkannt, so wird eine Absicherungsmaßnahme eingeleitet, die den Roboter 12 verlangsamt, ihn ausweichen lässt, auf ein Programm mit einem anderen Arbeitsbereich oder einer ungefährlichen Bewegung wechselt oder notfalls den Roboter 12 ganz anhält.

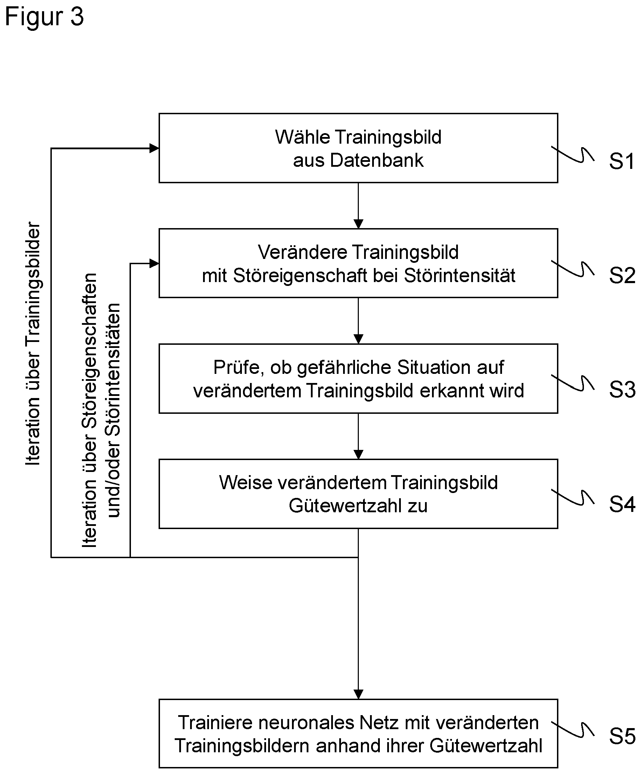

Der Auswertung der Sensordaten ist eine Detektionsfähigkeitsprüfung vorgelagert, in der entschieden wird, ob die Sensordaten die Einschätzung einer gefährlichen Situation überhaupt ermöglichen. Aus Gründen, die insbesondere in der Kamera 10 oder in der Szenerie im Umfeld des Roboters 12 liegen können, reicht nämlich die Qualität der Sensordaten dafür nicht immer aus. Die Detektionsfähigkeitsprüfung nutzt ein Verfahren des maschinellen Lernens und wird später samt dessen Trainings unter Bezugnahme auf die Figuren 2 und 3 näher erläutert.

Die Auswertungen erfolgen in einer Recheneinheit, bei der es sich um mindestens eine interne Recheneinheit 16 der Kamera 10, mindestens eine angeschlossene externe Recheneinheit 18 oder eine Kombination aus beidem handeln kann. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit), eine VPU (Video Processing Unit) oder dergleichen. Eine externe Recheneinheit kann ein Computer beliebiger Bauart einschließlich Notebooks, Smartphones, Tablets, einer (Si-cherheits-)steuerung ebenso sein wie ein lokales Netzwerk, ein Edge-Device oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietaugliche Standard.

Die Erfindung wird mit einer Kamera 10 als Beispiel für einen überwachenden Sensor beschrieben, entsprechend sind die Sensordaten beispielhaft Bilder. Es sind andere Sensoren denkbar, insbesondere ein 3D-Sensor, der als Sensordaten eine 3D-Punktwolke oder Tiefenkarte erzeugt.

Zumindest die Detektionsfähigkeitsprüfung, in einer bevorzugten Weiterbildung der Erfindung auch in Doppelfunktion die Bewertung von Sensordaten, ob eine gefährliche Situation vorliegt, basiert auf einem Verfahren des maschinellen Lernens. Beispielhaft und stellvertretend für jedes an sich bekannte Verfahren des maschinellen Lernens insbesondere für eine Klassifikation wird im Folgenden ein neuronales Netz verwendet. In einer Kurzbeschreibung wird der Detektionsfähigkeitsprüfung ein Eingangsbild zugeführt, und das neuronale Netz gibt eine als Gütewertzahl bezeichnete Rückmeldung darüber, ob dieses Eingangsbild für einen anderen Detektionsalgorithmus nutzbar ist, nämlich die Einschätzung, ob eine gefährliche Situation vorliegt. Jener Detektionsalgorithmus kann, wie schon angesprochen, ein klassisches Bildverarbeitungsverfahren oder ebenfalls ein Verfahren des maschinellen Lernens sein. Das kann im Kern eine Objekterkennung sein, aber auch andere und insbesondere fortschrittlichere Auswertungen beinhalten, wie eine Objektverfolgung, Personenerkennung, Posenbestimmung, Gesichtserkennung oder ein Codelesen.

Über die Detektionsfähigkeitsprüfung und die anschließende Bewertung, ob eine gefährliche Situation vorliegt, lassen sich zumindest drei Szenarien unterscheiden: Erstens kann keine Person oder sonstiges als gefährdet angesehenes Objekt vorhanden sein, und dies wird auch korrekt erkannt. Der Roboter 12 kann dann ungehindert arbeiten. Zweitens kann eine Person oder ein sonstiges Fremdobjekt in gefährlicher Situation korrekt erkannt worden sein. Der Roboter 12 muss dann abgesichert werden. Drittens kann die Detektionsfähigkeitsprüfung zu einem negativen Ergebnis kommen. Dann muss nicht mehr differenziert werden, ob mit den qualitativ als unzureichend erkannten Bildern eine gefährliche Situation erkannt wird oder nicht, weil diese Aussage ohnehin nicht belastbar wäre. Der Roboter muss auch jetzt abgesichert werden, wobei andere Maßnahmen ergriffen werden können als im Falle einer erkannten Gefährdungssituation. Eine momentan fehlende Detektionsfähigkeit ist eine potentielle Gefährdung und damit weniger kritisch als eine bereits explizit erkannte Gefahrensituation.

Figur 2 illustriert das Training der Detektionsfähigkeitsprüfung und zeigt dafür eine Darstellung der gezielten Störung von Trainingsdaten und des automatischen Annotierens, ob mit den jeweiligen gestörten Trainingsdaten noch die Erkennung einer gefährlichen Situation möglich ist. Ausgangspunkt sind ungestörte Trainingsbilder 20, die vorzugsweise aus realen Sensordaten gewonnen und die erst einmal nicht weiter manipuliert werden. Unter den ungestörten Trainingsbildern 20 sollten sowohl solche sein, in denen eine gefährliche Situation erfasst ist, insbesondere ein Objekt oder eine Person in einer aus Sicherheitsgründen nicht erlaubten Situation, als auch solche ohne gefährliche Situation beziehungsweise ohne Fremdobjekt. Der Hintergrund sollte vorzugsweise derjenige der Sicherheitsanwendung oder jedenfalls dazu hinreichend ähnlich sein. Für das überwachte Lernen ist zudem vorzugsweise von Anfang an bekannt, zu welcher dieser beiden Klassen ein Trainingsbild 20 gehört, wobei dies alternativ auch erst im weiteren Verlauf automatisch festgestellt werden kann. Solche Trainingsbeispiele sind nur mit viel Aufwand zu gewinnen und liegen daher in der Praxis nicht in ausreichender Anzahl vor. Das gilt vor allem für die hier betrachteten diversen Fehlerfälle und Störungen.

Um ausreichend Trainingsbilder zu gewinnen, die in unterschiedlicher Weise und in unterschiedlichem Maße gestört oder korrumpiert sind, werden die ungestörten Trainingsbilder 20 mindestens einem Störalgorithmus 20a-n unterzogen. Das folgt einer ähnlichen Idee wie die Augmentierung (data augmentation), mit der in an sich bekannter Weise ein Trainingsdatensatz durch künstliche Veränderungen vergrößert wird. Allerdings geht es vorliegend im Unterschied zu einer herkömmlichen Augmentierung ganz gezielt darum, dem Verfahren des maschinellen Lernens beizubringen, solche Störungen oder Veränderungen im Zuge der Detektionsfähigkeitsprüfung zu bewerten. Ein Störalgorithmus 22a-n manipuliert das Trainingsbild in mindestens einer Störeigenschaft oder Korruptionsmodalität (corruption modality) bei einer festlegbaren Störintensität.

Um eine verlässliche Detektionsfähigkeitsprüfung zu ermöglichen, sollte die Liste der berücksichtigten Störeigenschaften möglichst vollständig sein, also alle relevanten Störungen abbilden, die im Betrieb auftreten könnten. Das ist nicht immer möglich, aber hier hilft die Fähigkeit eines neuronalen Netzes zur Verallgemeinerung, etwaige Lücken auszugleichen. Für Bilder als weiterhin verwendetes Beispiel von Sensordaten kann folgende Liste von Störungen angegeben werden, die noch nicht unbedingt erschöpfend, jedoch für viele Sicherheitsanwendungen umfassend genug ist: Das Bild ist zu hell oder zu dunkel, das Bild ist zumindest bereichsweise unscharf, das Bild enthält Bewegungsartefakte oder Bildrauschen, es sind Bildbereiche vertauscht oder das Bild ist unvollständig.

Mit Hilfe des mindestens einen Störalgorithmus' 22a-22n entstehen auf wohldefinierte Weise gestörte oder korrumpierte Trainingsbilder 24a-n. Da es mehrere Störalgorithmen 22a-22n geben und jeder seine Störung in unterschiedlicher Störintensität durchführen kann, lassen sich sehr viel mehr gestörte Trainingsbilder 24a-n gewinnen als die anfänglich vorhandenen ungestörten Trainingsbilder. Zudem enthalten die gestörten Trainingsbilder 24a-n gezielt gerade die Merkmale, die trainiert werden sollen.

Um die gestörten Trainingsbilder 24a-n nicht von Hand bewerten zu müssen, was nicht ausgeschlossen ist, werden sie mindestens einem Detektionsalgorithmus 26a-m unterzogen. Das ist beispielsweise ein Objektdetektor oder ein sonstiges Verfahren zur Bewertung, ob eine gefährliche Situation vorliegt. Vorzugsweise handelt es sich um jenes Verfahren, das auch später im Betrieb für die Einschätzung gefährlicher Situationen verwendet wird. Das folgt der Heuristik, dass dann die Kriterien für die Beurteilung der Detektionsfähigkeit am besten passen müssten. Es ist aber eine Diversifikation in mehrere Richtungen denkbar: Beim Training und/oder im Betrieb können mehrere Verfahren eingesetzt sein, wobei sie sich zwischen Training und Betrieb voneinander teilweise unterscheiden können oder nicht. Das unterstützt auch die Fähigkeit des so trainierten neuronalen Netzes, auf unbekannte Situationen zu verallgemeinern.

Mit Hilfe des mindestens einen Detektionsalgorithmus' 26a-m sind die gestörten Trainingsbilder 24a-n nun gelabelt oder annotiert. Es ist also bekannt, ob es sich jeweils um ein Beispiel für ein Bild handelt, das die Beurteilung einer gefährlichen Situation ermöglicht oder ob dafür die Störungen zu stark sind. Die gestörten Trainingsbilder sind sozusagen in zwei Töpfe für Positivbeispiele 28a und Negativbeispiele 28b sortiert.

Figur 3 zeigt ergänzend zu Figur 2 ein beispielhaftes Ablaufdiagramm des Veränderns und Annotierens von Trainingsdaten und des damit ermöglichten Trainings eines neuronalen Netzes für eine Detektionsfähigkeitsprüfung. In einem ersten Schritt S1 wird dazu ein ungestörtes Trainingsbild 20 aus der anfangs vorhandenen Datenbank mit Trainingsbeispielen insbesondere aus realen Daten ausgewählt.

In einem Schritt S2 wird das Trainingsbild gestört oder korrumpiert. Die entsprechenden Störalgorithmen 22a-22n wurden bereits unter Bezugnahme auf Figur 2 beschrieben. Das Trainingsbild wird mit einer Störeigenschaft oder einer Kombination von Störeigenschaften modifiziert, wobei die meisten Störeigenschaften nicht binär eine Störeigenschaft ergänzen, sondern das Trainingsbild graduell mit einer Störintensität 22a-22n verändern.

Das jeweilige resultierende gestörte Trainingsbild 24a-n wird in einem Schritt S3 ausgewertet, ob hierin eine gefährliche Situation erkannt wird. Vorzugsweise wird dazu diejenige Auswertung verwendet, die auch im Betrieb zum Einsatz kommen wird. Die Detektionsfähigkeitsprüfung wird damit auf einen bestimmten, nämlich den relevanten Detektionsalgorithmus 26a-m geprüft, wobei wie zu Figur 2 erwähnt mehrere Detektionsalgorithmen 26a-m zum Einsatz kommen können. Vorstellbar ist auch, dass das neuronale Netz der Detektionsfähigkeitsprüfung mit allgemeinen Objektdetektoren vortrainiert und dann anwendungsspezifisch mit dem für eine bestimmte Sicherheitsanwendung vorgesehenen Auswerteverfahren zur Beurteilung einer gefährlichen Situation nachtrainiert wird.

In einem Schritt S4 wird festgestellt, ob eine gefährliche Situation erkannt werden konnte. Dies kann in sich das Ergebnis sein. Dem Trainingsbild wird also eine Gütewertzahl als Label zugeordnet, aus der hervorgeht, dass die Erkennung einer gefährlichen Situation möglich war, beziehungsweise dass es ein Positivbeispiel 28a ist, und entsprechend wäre eine nicht erkannte gefährliche Situation ein Negativbeispiel 28b. Robuster ist aber eine Alternative, in der zu den ursprünglichen ungestörten Trainingsbildern 20 bekannt ist, ob dies zu einer gefährlichen Situation gehört oder nicht. Das muss dann im Schritt S4 für ein Positivbeispiel 28a reproduziert werden, ansonsten ist es ein Negativbeispiel 28b. Hier hat sich also die Bedeutung von Positivbeispiel 28a und Negativbeispiel 28b verschoben, ein Positivbeispiel 28a ist hier nicht mehr eine erkannte Gefahr, sondern die richtige Einschätzung der Gefahrenlage entsprechend dem Anfangswissen zu dem ungestörten Trainingsbild 20, entsprechend ein Negativbeispiel 28b die fehlende Fähigkeit, dieses Anfangswissen zu reproduzieren. Die Klassifikation muss auch nicht binär auf Positivbeispiele 28a und Negativbeispiele 28b beschränkt bleiben. Es können quantitative Gütewertzahlen zu den verschiedenen Störeigenschaften mittrainiert und später mit ausgegeben werden, sei es um die binäre Entscheidung nachvollziehen zu können (explainable Al) oder um eine nachgelagerte binäre Entscheidung anhand der Gütewertzahlen zu ermöglichen.

Die Schritte S2-S4 können iteriert werden, wobei von Schritt zu Schritt die Störungen verstärkt werden, sei es durch Hinzunahme einer Störeigenschaft oder durch eine erhöhte Störintensität. Dadurch kann der Grenzfall gefunden werden, wieviel Störungen die spätere Auswertung verträgt, und somit werden auch ausreichend viele Trainingsbeispiele für Bilder erzeugt, mit denen die Detektionsfähigkeit nicht gegeben ist. Eine weitere, äußere Iteration über die Schritte S1 bis S4 arbeitet sich durch mehrere oder alle ungestörten Trainingsbilder 20 der Datenbank.

In einem Schritt S5 werden die so entstandenen gelabelten Trainingsbeispiele verwendet, um ein neuronales Netz für die Detektionsfähigkeitsprüfung zu trainieren. Es kann sinnvoll sein, mehrere neuronale Netze zu verwenden, die sich auf bestimmte Störeigenschaften spezialisieren. Dazu wird insbesondere der Trainingsdatensatz entsprechend der in seine Entstehung eingeflossenen Störeigenschaften aufgeteilt. Beispielsweise gibt es Störeigenschaften, die sich auf lokale Eigenschaften beziehen, wie unscharfe Kanten, und andere, die global wirken, wie die Vertauschung der beiden Bildhälften. Dafür sind dann womöglich unterschiedliche Netzwerkarchitekturen von Vorteil.

Es wurde mehrfach erwähnt, dass die Erfindung am Beispiel der Kamera 10 mit deren 2D-Bildern erläutert wurde, aber auch andere Sensoren möglich sind. Dann werden vorzugsweise auch andere Störeigenschaften berücksichtigt. Im Falle eines 3D-Sensors ist überdies vorstellbar, für die Detektionsfähigkeitsprüfung und deren Trainieren andere Daten zu verwenden, etwa rohe Phasenverschiebungen eines phasenbasierten Lichtlaufzeitverfahrens, als für die spätere Einschätzung einer Gefahr, die dann beispielsweise mit 3D-Punktwolken arbeitet.

Die Prüfung im späteren Betrieb der Sicherheitsanwendung, ob eine gefährliche Situation vorliegt, kann mit einer beliebigen Auswertung vorgenommen werden, etwa einer Objektdetektion mit klassischer Bildverarbeitung, einer Schutzfeldauswertung, einer Objektverfolgung und dergleichen. Es ist aber auch an dieser Stelle der Einsatz eines neuronalen Netzes oder sonstigen Verfahrens des maschinellen Lernens denkbar. Dessen Training kann sogar mindestens teilweise auf den Trainingsdaten der Detektionsfähigkeitsprüfung beruhen. Ferner ist denkbar, ein neuronales Netz für eine Objektdetektion oder sonstige Bewertung der Gefahrenlage mit der Detektionsfähigkeitsprüfung nachzutrainieren, so dass es eine Doppelfunktion erhält. Dazu kann erforderlich sein, die Architektur noch ein wenig zu modifizieren, um zusätzliche Ausgänge für Gütewertzahlen zu erhalten. Einige keineswegs abschließend genannte, an sich bekannte neuronale Netze, die sich für die Detektionsfähigkeitsprüfung, insbesondere in Verbindung mit einer Objektdetektion eignen können, sind Yolo (You only look once), MobileNet, ResNet und PoseNet.

## Patentansprüche

1. Verfahren zum Absichern einer Maschine (12), bei dem ein Sensor (10) die Maschine (12) überwacht und dazu Sensordaten erzeugt, die ausgewertet werden, so dass eine gefährliche Situation erkannt und im Falle einer gefährlichen Situation die Maschine (12) abgesichert wird, wobei in einer Detektionsfähigkeitsprüfung überprüft wird, ob eine Einschätzung einer gefährlichen Situation möglich ist, und andernfalls die Maschine (12) abgesichert wird,
**dadurch gekennzeichnet,**
**dass** in der Detektionsfähigkeitsprüfung die Sensordaten in einem Verfahren des maschinellen Lernens mit mindestens einer Gütewertzahl bewertet werden und eine Einschätzung einer gefährlichen Situation nur bei ausreichender Gütewertzahl als möglich angesehen wird.

2. Verfahren nach Anspruch 1,
wobei die Gütewertzahl binär ist oder wobei die Gütewertzahl mindestens eine Störeigenschaft der Sensordaten quantitativ bewertet.

3. Verfahren nach einem der vorhergehenden Ansprüche,
wobei das Verfahren des maschinellen Lernens einen Klassifikator aufweist.

4. Verfahren nach einem der vorhergehenden Ansprüche,
wobei das Verfahren des maschinellen Lernens ein neuronales Netz aufweist.

5. Verfahren nach einem der vorhergehenden Ansprüche,
wobei der Sensor (10) eine Kamera oder ein 3D-Sensor ist.

6. Verfahren nach einem der vorhergehenden Ansprüche,
wobei die Auswertung der Sensordaten einen Objektdetektor aufweist, der insbesondere Fremdobjekte in der Umgebung der Maschine (12) erkennt.

7. Verfahren nach einem der vorhergehenden Ansprüche,
wobei das Verfahren des maschinellen Lernens durch ein überwachtes Lernen trainiert wird, bei dem als Trainingsdaten eine Vielzahl von Trainingsbeispielen (20, 28a-b) aus Sensordaten mit bekannter zugehöriger Gütewertzahl verwendet werden.

8. Verfahren nach Anspruch 7,
wobei die Trainingsbeispiele (20) mit mindestens einer Störeigenschaft in mindestens eine Störintensität verändert werden, um weitere Trainingsbeispiele (24a-m, 28a-b) zu erzeugen.

9. Verfahren nach Anspruch 8,
wobei die Sensordaten Bilder aufweisen und mindestens eine der folgenden Störeigenschaften verwendet wird: Bild zumindest bereichsweise zu hell oder zu dunkel, Bild zumindest bereichsweise unscharf, Bewegungsartefakte, statisches oder/und dynamisches Bildrauschen, Bildbereiche vertauscht, Bild unvollständig.

10. Verfahren nach Anspruch 8 oder 9,
wobei die Trainingsdaten (24a-n) ausgewertet werden, insbesondere mit einem Objektdetektor, um festzustellen, ob trotz der Störeigenschaft eine gefährliche Situation erkannt wird, und je nach Ergebnis einem Trainingsbeispiel (28a-b) eine Gütewertzahl zuzuordnen.

11. Verfahren nach Anspruch 10,
wobei die Trainingsdaten (24a-b) mit demselben Verfahren (26a-b) ausgewertet werden, das auch zum Erkennen einer gefährlichen Situation in der Absicherung der Maschine (12) zum Einsatz kommt.

12. Verfahren nach einem der Ansprüche 8 bis 11,
wobei die Trainingsdaten (20) mit zunehmender Störintensität und/oder unterschiedlichen Störeigenschaften verändert werden, bis eine Auswertung der veränderten Trainingsdaten (24a-n) eine gefährliche Situation nicht mehr erkennt.

13. Verfahren nach einem der Ansprüche 7 bis 12,
wobei zur Schaffung einer Sicherheitsmarge bereits Trainingsbeispielen (28a-b) eine Gütewertzahl entsprechend einer nicht mehr vorhandenen Detektionsfähigkeit zugeordnet wird, in denen die Auswertung eine gefährliche Situation noch erkannt hat.

14. Verfahren nach einem der vorhergehenden Ansprüche,
wobei die Auswertung der Sensordaten zur Erkennung einer gefährlichen Situation ebenfalls ein Verfahren des maschinellen Lernens aufweist, insbesondere das Verfahren des maschinellen Lernens der Detektionsfähigkeitsprüfung in Doppelfunktion.

15. Absicherungssystem (10, 16, 18) zum Absichern einer Maschine (12), das mindestens einen Sensor (10) zur Überwachung der Maschine (12) und zur Erzeugung von Sensordaten und mindestens eine Steuer- und Auswertungseinheit (16, 18) aufweist, in der ein Verfahren nach einem der vorhergehenden Ansprüche implementiert ist.

## Claims

1. A method for safeguarding a machine (12), in which a sensor (10) monitors the machine (12) and for this purpose generates sensor data that are evaluated so that a dangerous situation is recognized and, in the event of a dangerous situation, the machine (12) is safeguarded, wherein, in a detection capability check, it is checked whether an assessment of a dangerous situation is possible, and otherwise the machine (12) is safeguarded,
**characterized in that**,
in the detection capability check, the sensor data are assessed with at least one quality score in a machine learning method and an assessment of a dangerous situation is only considered possible with a sufficient quality score.

2. A method according to claim 1,
wherein the quality score is binary or wherein the quality score quantitatively assesses at least one interference property of the sensor data.

3. A method according to one of the preceding claims,
wherein the machine learning method has a classifier.

4. A method according to any one of the preceding claims,
wherein the machine learning method has a neural network.

5. A method according to any one of the preceding claims,
wherein the sensor (10) is a camera or a 3D sensor.

6. A method according to any one of the preceding claims,
wherein the evaluation of the sensor data has an object detector which in particular recognizes foreign objects in the environment of the machine (12).

7. A method according to any one of the preceding claims,
wherein the machine learning method is trained by a supervised learning in which a plurality of training examples (20, 28a-b) from sensor data with a known associated quality score are used as training data.

8. A method according to claim 7,
wherein the training examples (20) are changed with at least one interference property to at least one interference intensity in order to generate further training examples (24a-m, 28a-b).

9. A method according to claim 8,
wherein the sensor data comprise images and at least one of the following interference properties is used: image at least regionally too bright or too dark, image at least regionally blurred, motion artifacts, static and/or dynamic image noise, image regions swapped, image incomplete.

10. A method according to claim 8 or 9,
wherein the training data (24a-n) are evaluated, in particular using an object detector, to determine whether a dangerous situation is recognized despite the interference property and, depending on the result, to assign a quality score to a training example (28a-b).

11. A method according to claim 10,
wherein the training data (24a-b) are evaluated using the same method (26a-b) that is also used to recognize a dangerous situation in the safeguarding of the machine (12).

12. A method according to any one of the claims 8 to 11,
wherein the training data (20) are changed with an increasing interference intensity and/or different interference properties until an evaluation of the changed training data (24a-n) no longer recognizes a dangerous situation.

13. A method according to any one of the claims 7 to 12,
wherein, in order to provide a safety margin, training examples (28a-b) in which the evaluation still recognized a dangerous situation are already assigned a quality score corresponding to a no longer existing detection capability.

14. A method according to any one of the preceding claims,
wherein the evaluation of the sensor data for recognizing a dangerous situation likewise comprises a machine learning method, in particular the machine learning method of the detection capability check in a dual function.

15. A safeguarding system (10, 16, 18) for safeguarding a machine (12), said safeguarding system (10, 16, 18) comprising at least one sensor (10) for monitoring the machine (12) and for generating sensor data and at least one control and evaluation unit (16, 18) in which a method according to any one of the preceding claims is implemented.

## Revendications

1. Procédé de sécurisation d'une machine (12), dans lequel un capteur (10) surveille la machine (12) et génère à cet effet des données de capteur qui sont évaluées, de sorte qu'une situation dangereuse est détectée et que, dans le cas d'une situation dangereuse, la machine (12) est sécurisée, dans lequel un test de vérification de l'aptitude à la détection vérifie s'il est possible d'estimer une situation dangereuse, et sinon, la machine (12) est sécurisée,
**caractérisé en ce que**
dans le test de vérification de l'aptitude à la détection, les données du capteur sont cotées avec au moins un score de qualité par un procédé d'apprentissage automatique, et une estimation d'une situation dangereuse n'est considérée comme étant possible que si le score de qualité est suffisant.

2. Procédé selon la revendication 1,
dans lequel le score de qualité est binaire ou le score de qualité évalue quantitativement au moins une propriété perturbatrice des données du capteur.

3. Procédé selon l'une des revendications précédentes,
dans lequel le procédé d'apprentissage automatique comprend un classificateur.

4. Procédé selon l'une des revendications précédentes,
dans lequel le procédé d'apprentissage automatique comprend un réseau neuronal.

5. Procédé selon l'une des revendications précédentes,
dans lequel le capteur (10) est une caméra ou un capteur 3D.

6. Procédé selon l'une des revendications précédentes,
dans lequel l'évaluation des données du capteur comprend un détecteur d'objets qui détecte en particulier les objets étrangers dans l'environnement de la machine (12).

7. Procédé selon l'une des revendications précédentes,
dans lequel le procédé d'apprentissage automatique est entraîné par un apprentissage supervisé, dans lequel une pluralité d'exemples d'entraînement (20, 28a-b) issus de données de capteur avec un score de qualité associé connu sont utilisés comme données d'entraînement.

8. Procédé selon la revendication 7,
dans lequel les exemples d'entraînement (20) avec au moins une propriété perturbatrice sont modifiés en au moins une intensité de perturbation afin de générer d'autres exemples d'entraînement (24a-m, 28a-b).

9. Procédé selon la revendication 8,
dans lequel les données de capteur comprennent des images, et au moins l'une des propriétés perturbatrices suivantes est utilisée : image trop claire ou trop sombre au moins par endroits, image floue au moins par endroits, artefacts de mouvement, bruit d'image statique et/ou dynamique, zones d'image permutées, image incomplète.

10. Procédé selon la revendication 8 ou 9,
dans lequel les données d'entraînement (24a-n) sont évaluées, en particulier à l'aide d'un détecteur d'objets, afin de déterminer si une situation dangereuse sera détectée malgré la propriété perturbatrice et, en fonction du résultat, d'attribuer un score de qualité à un exemple d'entraînement (28a-b).

11. Procédé selon la revendication 10,
dans lequel les données d'entraînement (24a-b) sont évaluées à l'aide du même procédé (26a-b) que celui utilisé pour détecter une situation dangereuse dans le cadre de la sécurisation de la machine (12).

12. Procédé selon l'une des revendications 8 à 11,
dans lequel les données d'entraînement (20) ayant une intensité de perturbation croissante et/ou différentes propriétés perturbatrices sont modifiées jusqu'à ce qu'une évaluation des données d'entraînement modifiées (24a-n) ne détecte plus de situation dangereuse.

13. Procédé selon l'une des revendications 7 à 12,
dans lequel, afin de créer une marge de sécurité, un score de qualité, correspondant à l'absence de l'aptitude à la détection, est d'ores et déjà attribué à des exemples d'entraînement (28a-b) dans lesquels l'évaluation a encore détecté une situation dangereuse.

14. Procédé selon l'une des revendications précédentes,
dans lequel l'évaluation des données de capteur pour détecter une situation dangereuse comprend également un procédé d'apprentissage automatique, à savoir en particulier le procédé d'apprentissage automatique du test de vérification de l'aptitude à la détection, qui assure ainsi une fonction double.

15. Système de sécurisation (10, 16, 18) pour sécuriser une machine (12), qui comprend au moins un capteur (10) pour surveiller la machine (12) et pour générer des données de capteur, et au moins une unité de commande et d'évaluation (16, 18) dans laquelle est implémenté un procédé selon l'une des revendications précédentes.
